# EUROPEAN PATENT SPECIFICATION

(11) **EP 1 511 553 B1**
(45) Date of publication and mention of the grant of the patent: **05.12.2007**
(21) Application number: 03741793.8
(22) Date of filing: 09.05.2003
(51) Int. Cl.: B01D 53/60

(54) **OXIDATION OF NOx'S WITH SODIUM CHLORITE IN COMBINATION WITH A THERMAL NOX REMOVAL PROCESS**
OXIDATION VON NOX UNTER VERWENDUNG VON NATRIUMCHLORIT ZUSAMMEN MIT THERMISCHEM VERFAHREN ZUR BESEITIGUNG VON NOX
OXYDATION DES NOX AU MOYEN DE CHLORITE DE SODIUM, EN COMBINAISON AVEC UN PROCEDE THERMIQUE D'ELIMINATION DE NOX

(30) Priority: 05.06.2002 US 386560 P; 05.06.2002 US 386492 P; 24.01.2003 US 442268 P
(43) Date of publication of application: 09.03.2005
(73) Proprietor: ExxonMobil Research and Engineering Company, Annandale, NJ 08801-0900 (US)
(72) Inventor: TAKACS, Theresa, J., Annadale, VA 22003 (US); BALMER, Robert, G., Glen Gardner, NJ 08826 (US); HURST, Boyd, E., Humble, TX 77346 (US); MCLAUGHILIN, William, J., Houston, Texas 77006 (US); KNIGHT, David, G., Fairfax, VA 22030 (US); CUNIC, John, D., Denville, NJ 07834-9532 (US); SHAW, Henry, Scotch Plains, NJ 07076 (US); YANG, Chen-Lu, Millburn, NY 07041 (US); GU, Pin, Belleville, NJ 07109 (US)
(74) Representative: Dew, Melvyn John
(86) International application number: PCT/US2003/014653
(87) International publication number: WO 2003/103808

(56) References cited:
- EP-A- 0 199 037
- EP-A- 0 962 247
- DE-A- 3 230 352
- DE-A- 3 908 052
- DE-C- 3 816 532

## Description

The present invention relates to a process for reducing the NOₓ concentrations in waste gas streams generated by combustion processes. More particularly, the present invention relates to a process for reducing NOₓ concentrations in waste gas streams by contacting the waste gas stream with a reducing agent selected from ammonia and urea. Sodium chlorite is then mixed with the waste gas streams generated in a manner such that the sodium chlorite oxidizes at least a portion of the lower NOₓ's present in the waste gas streams to higher oxides.

Increasingly stringent government regulatory emission standards have forced refiners to explore improved technologies for reducing the concentration of nitrogen oxides (NOₓ) in emissions from combustion and production effluent streams. Various technologies have been developed for reducing nitrogen oxides emissions from combustion and production effluents, such as, for example. United States Patent Number 3,957,949 to Senjo, et al, and United States Patent Number 6,294,139 to Vicard et al. Further, it is known in the art to reduce NOₓ concentrations in combustion effluent streams by the injection of ammonia, and one such patent utilizing this technology is United States Patent Number 3,900,554 to Lyon. After the Lyon patent, there was a proliferation of patents and publications relating to the injection of ammonia into combustion effluent streams in order to reduce the concentration of NOₓ's. Such patents include United States Patent Numbers 4,507,269, Dean et al., and 4,115,515, Tenner et al. Other patents disclose the use of ammonia injection based on the use of kinetic modeling to determine the amount of ammonia injected. Such patents include United States Patent Numbers 4,636,370, 4,624,840, and 4,682,468, all to Dean et al. There have also been a number of patents and publications relating to the injection of urea into combustion effluent streams in order to reduce the concentration of NOₓ. One such patent covering this technology is United States Patent Number 4,208,386 to Arand et al. A study by Kim and Lee (1996) published in the Journal of Chemical Engineering of Japan, "Kinetics of NOx Reduction by Urea Solution in a Pilot Scale Reactor", Journal of Chemical Engineering of Japan, Vol. 29, No. 4, 1996. pp. 620-626, shows that urea dissociates to ammonia and cyanuric acid (HNCO) and that both of these act as reducing agents for NO in two interrelated chains of free radical reactions.

However, effluents released from combustion units and production streams, such as the regenerator off-gas of a fluidized catalytic cracking unit, remain a source of NOₓ's in the refinery environment. In most refineries, fluidized catalytic cracking process units incorporate wet gas scrubbers to remove attrited catalyst fines. These wet gas scrubbers give the refiner the added benefit of reducing, to a degree, NOₓ emissions because wet gas scrubbers also scrub NO₂ from the fluidized catalytic cracking process unit's waste gas streams. However, the use of these scrubbers is not entirely effective in reducing NOₓ emissions because in existing scrubbed and/or saturated gas systems, such as wet gas scrubbers on combustion units like the fluidized catalytic cracking unit, the off-gasses typically contain NO and NO₂. NO₂ can be removed by scrubbing, but NO cannot. The fact that NO can not be removed by scrubbing is a problem because the majority of the NOₓ's contained in these waste gas streams is NO. For example, the NOₓ's in the offgas of a fluidized catalytic cracking unit sent to the wet gas scrubber are typically about 90% NO.

Thus, many refiners have experimented and implemented techniques to oxidize NOₓ's to higher oxides, and these techniques have been met with mixed results. Most of the techniques used today involve chemicals that require extended reaction periods, and others create problems within the processing unit. Such problems include, for example, corrosion of materials of construction, problems with treating the waste water of the units, as well as problems with the removal of SOₓ's. For example, it is known in the art to add sodium chlorite (NaClO₂) to the wet gas scrubber liquor to oxidize NOₓ's to higher oxides such as, for example, NO₂ and N₂O₅ which are water soluble and can be removed from the process system, typically as nitrate and nitrite, respectively. The solubility of these higher oxides in water is described by J.B. Joshi, V.V. Mahajani, and V.A. Juvekar in "Invited Review: Absorption of NOx Gases," Chemical Engineering Communication, Vol. 33 pp 1-92.
DE 3816532 discloses a process for cleaning flue gas.

However, the addition of NaClO₂ to the scrubber liquor has problems. For example, sodium chlorite is a costly chemical and is consumed by side reactions such as the oxidation of SOₓ's to higher oxides (e.g. SO₂ to SO₃). Thus, because sodium chlorite does not selectively oxidize NOₓ's to higher oxides, conventional methods used high sodium chlorite concentrations in the scrubber liquor to achieve the desired reduction of NOₓ's. These high levels of sodium chlorite lead to high chloride levels which cause, among other problems, corrosion of the scrubber's materials of construction.

Thus, there still is a need in the art for an economical and effective method to remove NOₓ's from waste gas streams.

According to the present invention there is provided a process according to any of the accompanying claims.
In an embodiment there is provided a process for oxidizing at least a portion of NOₓ's contained in a SOₓ-containing waste gas stream, which stream contains both lower and higher nitrogen oxides, which process comprises:
a) forming a mixture of a reducing agent selected from ammonia and urea and a readily-oxidizable gas in an effective amount that will reduce the NOₓ concentration of said waste gas stream by a predetermined amount;
b) injecting said mixture into said waste gas stream at a point wherein said SOₓ-containing waste gas stream is at a temperature below 870°C (1600°F);
c) removing at least a portion of the SOₓ's present in said waste gas stream;
d) mixing an effective amount of sodium chlorite with said waste gas stream at a point downstream from step c) above thereby oxidizing at least a portion of lower NOₓ's present in said waste gas stream to higher oxides.

In another embodiment of the present invention, spray nozzles of a wet gas scrubber separator drum are used to mix the sodium chlorite with the SOₓ-containing waste gas stream.

In another embodiment, the higher oxides of the NOₓ's are removed from the waste gas stream by a method selected from the group consisting of alkaline solution absorption, reducing solution absorption, scrubbing, ammonia injection, catalytic conversion, and absorption with water.

In another embodiment of the present invention, an effective amount of reducing agent and readily-oxidizable gas are injected into an existing regenerator overhead line at a point upstream of an FCCU's heat recovery device.

In another embodiment of the present invention, an effective amount of reducing agent and readily-oxidizable gas are simultaneously injected into an existing regenerator overhead line at multiple locations upstream of an FCCU's heat recovery device.

In yet another embodiment of the present invention, the readily-oxidizable gas is hydrogen and the reducing agent is ammonia.

### DETAILED DESCRIPTION OF THE PRESENT INVENTION

As used herein, the terms NOₓ's, nitrogen oxides or nitrogen oxide refers to the various oxides of nitrogen that may be present in combustion waste gasses. Thus, the terms refer to all of the various oxides of nitrogen including, but not limited to, nitric oxide (NO), nitrogen dioxide (NO₂), nitrogen peroxide (N₂O₄), nitrogen pentoxide (N₂O₅), and mixtures thereof. However, the term also loosely refers to nitric oxide (NO) since NO typically comprises greater than 90% of the nitrogen oxides present in combustion waste gasses upon which the presently claimed invention is practiced. Therefore, the presently claimed process is especially concerned with the reduction and control of NO. Also, the terms flue gas, wet gas, combustion waste gas, and waste gas stream are used interchangeably herein to refer to the same scrubbed and/or saturated gas streams. Also, the terms wet gas scrubber, scrubbing apparatus, and scrubber are used interchangeably herein. It should also be noted that "higher oxide" as used herein is meant to refer to any NOₓ wherein "x" is two or greater.

It should also be noted that mixing, as used herein when describing the mixing of a reducing agent and a readily-oxidizable gas, is meant to refer to the broadest meaning given the term. Thus, mixing refers to the objective of maximizing the local contact of a reducing agent and a readily-oxidizable gas with the NOₓ in the waste gas stream at the desired molar ratios. Any suitable mixing techniques can be employed to achieve this end. These techniques include, but are not limited to, using a carrier gas with the reducing agent and/or readily-oxidizable gas to encourage more homogenous mixing; injecting a premixed stream of a reducing agent, readily-oxidizable gas and carrier gas into the waste gas stream; or, injecting a stream of reducing agent and carrier gas and a stream of readily-oxidizable gas and carrier gas into the waste gas stream separately. Non-limiting examples of suitable pre-injection mixing techniques, processes or means include piping the reducing agent, readily-oxidizable gas and carrier gas through separate lines into one common vessel or into the injection line to the waste gas stream, allowing the two reagents and the carrier to mix as they flow towards the injection point.

The present invention provides a cost-effective manner whereby refiners can remove NOₓ's from waste gas streams, such as, for example, the waste gas generated by a fluidized catalytic cracking unit. The oxidation of NOₓ's to higher oxides is an effective way to remove NOₓ's from flue gas streams because the higher nitrogen oxides such as, for example, NO₂ and N₂O₅ are water soluble and can be removed from the system as nitrate or nitrite because the higher oxides such as, for example, NO₂ and N₂O₅, are more easily removed than the lower oxides. Thus, the presently claimed process involves forming a mixture of a reducing agent and readily-oxidizable gas in amounts effective at reducing the NOₓ concentration of the waste gas stream by a predetermined amount, removing at least a portion of the SOₓ's present in the stream, and adding an effective amount of sodium chlorite to the waste gas stream whereby a portion of the NOₓ's contained in the waste gas stream are oxidized to higher oxides (e.g. NO oxidized to NO₂). The higher oxides can then be removed by a method selected from alkaline solution absorption, reducing solution absorption, scrubbing ammonia injection, catalytic conversion and absorption with water.

As used herein, an effective amount of sodium chlorite is an amount that oxidizes at least a portion of the NOₓ's present in the waste gas stream such that at least 20 vol.%, for example 20 vol.% to 80 vol.%, preferably 40 vol.% to 90 vol.% of the NOₓ's, more preferably 50 vol.% to 99 vol.%, and most preferably substantially all of the NOₓ's present in the waste gas stream are oxidized to higher oxides.

The instant inventi on is especially suited for reducing the concentration of NOₓ's within the process flow scheme of a Fluidized Catalytic Cracking Unit ("FCCU"). Fluidized catalytic cracking is an important and widely used refinery process. The catalytic cracking process typically converts heavy oils into lighter products such as gasoline. In the fluidized catalytic cracking (FCC) process, an inventory of particulate catalyst is continuously cycled between a cracking reactor and a catalyst regenerator. Average reactor temperatures are in the range of 480-530°C (900-1000°F), with average feed temperatures from 260-420°C (500-800°F). The reactor and the regenerator together provide the primary components of the catalytic cracking unit. FCC process units are well known in the art and United States Patent Number 5,846,403, Swan, et al., incorporated herein by reference, provides a more detailed discussion of such a unit.

The regenerator is especially important to catalyst life and effectiveness because during the fluidized catalytic cracking process, carbonaceous deposits (coke) are formed on the catalyst, which substantially decrease its activity. The catalyst is then typically regenerated to regain its effectiveness by burning off at least a portion of the coke in the regenerator. This is typically done by injecting air, or another gas having a combustible amount of oxygen, into the regenerator at a rate sufficient to fluidize the spent catalyst particles. A portion of the coke contained on the catalyst particles is combusted in the regenerator, resulting in regenerated catalyst particles. Typical regenerator temperatures range from 560 to 787 °C (1050°F to 1450°F), while exit temperatures of the regenerator off-gas usually range from 650 to 820 °C (1200°F to 1500°F).

After regeneration, the catalyst particles are cycled back to the reactor. The regenerator off-gas is usually passed to further processes such as heat recovery devices, particulate removal devices, carbon monoxide combustion/heat recovery units (COHRU), which, as previously mentioned, are designed to convert CO to CO₂ and recover available fuel energy, and SOₓ removal devices.

In this preferred embodiment of the present invention, the initial NOₓ removal step removes at least a portion of the NOₓ's present in the waste gas stream, thus reducing the amount of sodium chlorite needed to oxidize the remaining NOₓ' present in the waste gas stream. In this first removal step, a predetermined amount of the NOₓ's is removed from the waste gas stream. This predetermined amount is typically at least 10 vol.%, preferably by more than 30% by volume, more preferably more than 50% by volume, and most preferably a reduction of more than 70% by volume, based on the total volume of NOₓ present in the process stream.

The NOₓ's are removed through the use of an effective amount of a reducing agent selected from urea and ammonia. Preferred is ammonia. An effective amount of reducing agent is to be considered that amount of reducing agent that will reduce the NOₓ concentration by the predetermined amount. An effective amount of reducing agent will typically range from 0.5-12 moles of reducing agent per mole of NOₓ, preferably 0.5-8 moles of reducing agent per mole of NOₓ. It is most preferred to use 1-4 moles of reducing agent per mole of NOₓ. It should be noted that the reducing agent is used in conjunction with a readily-oxidizable gas for purposes of this invention.

It is believed that a complex chain of free radical reactions achieves the non-catalytic reduction of NOₓ with the present reducing agent and readily-oxidizable gas. Not wanting to be limited by theory, the inventors herein believe the overall effect can be illustrated by the following two competing reactions:

Equation 1: NO + NH₃ + O₂ → N₂ + H₂O (reduction)

Equation 2: NH₃ + O₂ → NO + H₂O (oxidation)

The use of urea as the reducing agent introduces cyanuric acid (HNCO) as well as ammonia to the process. As demonstrated in the work of Lee and Kim (1996), cyanuric acid acts as a reducing agent for NO and also interacts with the NO-NH₃-O₂ chemistry summarized in Equations 1 and 2. Although the cyanuric acid reduction process is not thoroughly understood, and not wishing to be limited by theory, the inventors hereof believe that the dissociation of one mole of urea liberates one mole of ammonia and one mole of cyanuric acid. Experimental data from the Kim and Lee study (1996) suggests that cyanuric acid stoichiometrically reduces NO to elemental nitrogen and water at a molar ratio with NO of 1:1. Thus, urea should generally be used at a molar ratio to NO that is roughly one half the effective molar ratio for ammonia.

The reduction reaction of Equation 1 dominates in the 870°C to 1100°C (1600°F-2000°F) temperature range. Above 1100°C (2000°F), the reaction of Equation 2 becomes more prevalent. Thus, in the practice of the present invention, it is desirable to operate at temperatures below 1100°F (2000°F). However, operating temperatures lower than 870°C (1600°F) are achievable with the reduction reaction still being dominated by Equation 1 through the use of the present invention. The inventors hereof have unexpectedly found that, at temperatures below 870°C (1600°F), the reduction reaction of Equation 1 will not effectively reduce NOₓ without the injection of a readily-oxidizable gas, such as hydrogen. It should be noted that as the temperature of the process stream decreases, the amount of readily-oxidizable gas needed to drive the reduction reaction increases. However, the inventors herein have determined that the molar ratios of readily-oxidizable gas disclosed herein can be used at an effective operating temperature range below 870°C (1600°F), even below 700°C (1300°F), with the reduction reaction still being dominated by Equation 1. This makes the present invention especially suited for reducing NOₓ concentrations in the off-gas of an FCCU regenerator because the temperature of the regenerator off-gas stream is typically low, below 870°C (1600°F). It should be noted, however, that the present invention can also effectively operate over any temperature range between 530°C to 870°C (1200°F to 1600°F).

A readily-oxidizable gas is used to drive the NOₓ reduction reaction. An effective amount of readily-oxidizable gas is that amount that enables the reducing agents of the present invention to effectively reduce the NOx concentration by the predetermined amount. A molar ratio of 1:1 to 50:1 moles of readily-oxidizable gas per mole of reducing agent is considered an effective amount of readily-oxidizable gas, preferably greater than 10:1 to 40:1, more preferably 11:1 1 to 40:1, and most preferably 15:1 1 to 30:1. The actual mole ratio employed will be dependent on such things as the temperature of the waste gas stream; the composition of the waste gas stream; the effectiveness of the injection means used for mixing the readily-oxidizable gas with the carrier gas, the reducing agent and the NOₓ-carrying stream; and the reducing agent utilized. Thus, for a given waste gas stream, the most effective readily-oxidizable gas to reducing agent molar ratio will be in the 1:1 to 50:1 range. The injection of readily-oxidizable gas at rates yielding readily-oxidizable gas to reducing agent molar ratios greater than 10:1 1 is, in part, made necessary by the low oxygen concentration found in waste gas streams such as the regenerator off-gas. For example, such streams typically contain less than 1.5% by volume of O₂.

The reducing agent and readily-oxidizable gas are introduced or conducted into the waste gas stream at a point before at least a portion of the SOₓ's present in the stream are removed. At this point, the waste gas stream flowing from the regenerator to the next piece of processing equipment, typically a COHRU, must have a concentration greater than 0.1 vo1.% oxygen, based on the volume of the stream. Preferably the process stream contains at least 0.4, more preferably 0.4 to 1.5 vol.%. Thus, this stage of the process is especially well suited for treating the regenerator off-gas of a fluidized catalytic cracking unit. It is preferred that the reducing agent and readily-oxidizable gas be introduced directly into a regenerator overhead line of a fluidized catalytic cracking unit ("FCCU") before the carbon monoxide combustion/heat recovery unit associated with the FCCU. It is more preferred that the reducing agent and readily-oxidizable gas be introduced directly into the regenerator overhead line as near the outlet from the regenerator as possible. It is also contemplated within this embodiment that the reducing agent and readily-oxidizable gas be simultaneously conducted or introduced into the regenerator overhead line through multiple points located along the regenerator overhead line.

Since the amount of readily-oxidizable gas and reducing agent used are typically a small percentage of the regenerator off-gas flow, typically less than 0.5% by volume, based on the volume of the stream, it is preferred to use only an effective amount of a readily available and relatively inexpensive carrier material. Non-limiting examples of carrier materials include air and steam; however, any carrier material that does not have a deleterious effect on NOₓ reduction, or which itself contributes to undesirable emissions, can be used. Thus, it is contemplated to mix effective amounts of reducing agent and/or readily-oxidizable gas prior to mixing with a carrier material, or within the line that contains the carrier material. It is preferred that the reducing agent/readily-oxidizable gas mixture be injected into the line that conducts the carrier material.

By an effective amount of carrier material, it is meant an amount of carrier material that will adequately mix the reducing agent and the readily-oxidizable gas with the process stream, i.e., maximize the contact of the two reagents with the NOₓ sought to be reduced.

The regenerator off-gas also typically contains catalyst fines. These catalyst particles may be removed from the regenerator off-gas by any suitable means known in the art. However, the presence of catalyst fines in the regenerator off-gas is believed to assist the NOₓ reduction reaction. Thus, the presence of some catalyst fines, although not necessary for the practice of the instant invention, is preferred to assist the NOₓ reduction reaction and reduce the amount of readily oxidizable gas that is needed.

In a preferred embodiment of the present invention, effective amounts of a reducing agent and a readily-oxidizable gas, preferably with an effective amount of carrier material, are injected directly into the regenerator's existing overhead line. Thus, the existing overhead line functions as the reaction zone for the NOₓ reduction reaction, thereby eliminating the need to add costly processing equipment to effectuate the present process. The injection mixture is preferably injected at a point between the COHRU and the regenerator. It is preferred that the injection occur as near the regenerator off-gas outlet as possible so that the higher temperatures near the regenerator outlet can be utilized, thereby reducing the amount of readily-oxidizable gas needed for a desired level of NOₓ reduction. It is also advantageous to maximize the residence time of the reducing agent and readily-oxidizable gas in the NOₓ reduction reaction.

In another embodiment, at least two, preferably a plurality of, injection points are used along the regenerator overhead line. Effective amounts of a reducing agent and a readily-oxidizable gas, preferably with an effective amount of carrier material, are injected through these multiple injection points, which will typically be between the COHRU and the regenerator. Preferably all injections occur simultaneously. Thus, the existing regenerator overhead line again functions as the reaction zone for the NOₓ reduction reaction, thereby eliminating the need to add costly processing equipment to effectuate the present process. Preferably, the simultaneous injections occur as near the regenerator off-gas outlet as possible. However, the multiple injection locations are also preferably spaced such that the appropriate residence time between locations is achieved such that the desired effect from the use of multiple injection locations is realized. As previously mentioned, it is advantageous to maximize the residence time of the reducing agent and readily-oxidizable gas in the overhead line to complete the reaction.

As previously discussed, the addition of sodium chlorite to the scrubber liquor is known in the art, as described in U.S. Patent Number 6,294,139, which has already been incorporated by reference. By adding sodium chlorite to the scrubber liquor, the refiner was at a disadvantage because sodium chlorite also oxidizes SOₓ's to higher sulfur oxides. This non-preferential oxidation reaction forced refiners to inject high levels of sodium chlorite into the waste gas stream in order to remove a satisfactory amount of NOₓ's present in the waste gas stream. As previously discussed, these high levels of sodium chlorite have the undesirable effects of corrosion of the scrubber, problems with waste water treatment, and also increased expenditures on reagents. Also, the use of chlorine dioxide to oxidize the NOₓ's to higher oxides in combination with sodium chlorite absorption to remove the higher oxides has the disadvantage of cost as well as problems previously discussed.

The presently claimed invention solves these and other problems by contacting the scrubbed and/or saturated gas, sometimes referred to herein as flue gas, directly with sodium chlorite (NaClO₂) downstream from a SOₓ removal step. The method by which the SOₓ's are removed is not essential to the present invention and may be any method known in the art. However, the method chosen by the practitioner of the presently claimed invention should reduce the levels of SOₓ's in the waste gas stream to below 100 ppm, preferably below 50 ppm, and more preferably below 10 ppm before the sodium chlorite is mixed with the waste gas stream. It is most preferred to remove substantially all of the SOₓ's present in the waste gas stream before the sodium chlorite is mixed with the waste gas stream. Non-limiting examples of SOₓ removal processes suitable for use herein include wet desulfurization methods such as water scrubbing, alkali scrubbing, magnesia scrubbing, and ammonium scrubbing; as well as dry desulfurization methods such as using manganese oxide or activated carbon. Preferably, the SOₓ's are removed by a wet desulfurization method, most preferably by use of a wet gas scrubber.

By using wet gas scrubbers, refiners remove, among other things, attrited catalyst fines and SOₓ's. Thus, by contacting the flue gas with the sodium chlorite after the scrubbers, there are lesser amounts of SOₓ's present in the waste gas stream at the point of mixing with the sodium chlorite. Thus, the refiner can use lesser quantities of sodium chlorite to achieve the desired reduction of NOₓ's. Further, the lower use rates of sodium chlorite that are needed to oxidize the NOₓ's to higher oxides assist the refiner in overcoming problems associated with conventional methods such as, for example, corrosion and wastewater treatment.

The mechanism by which NaClO₂ oxidizes lower NOₓ's to higher oxides is complex and not fully documented. In the practice of the presently claimed invention, sodium chlorite can react directly with the NOₓ's, or under acidic conditions, considered below a pH of 6 herein, form chlorine dioxide. While not wishing to be limited by theory, it is believed that under such acidic conditions, the sodium chlorite compound disproportionates into sodium ions and chlorine dioxide. The chlorine dioxide thus formed is a gaseous compound that oxidizes lower NOₓ's to higher oxides. The inventors hereof believe that the general oxidation reaction whereby chlorine dioxide oxidizes NOₓ's is represented by the following equation:

Equation 1: 5NO + 3ClO₂ + 4H₂O → 5HNO₃ + 3HCl

Thus, in using sodium chlorite in an acidic environment, at a pH below 6, the amount of chlorine dioxide needed to oxidize at least a portion of the lower NOₓ's to higher oxides must be considered such that sufficient quantities of sodium chlorite are used so that when the sodium chlorite disproportionates; there are sufficient concentrations of chlorine dioxide present to oxidize the lower NOₓ's to higher oxides. Generally, the amount sodium chlorite used in an acidic environment is such that the yield of chlorine dioxide after the sodium chlorite disproportionates is 3 to 8 moles of ClO₂ to 5 moles of NO. The refiner can also practice the present invention by using that amount of sodium chlorite that yields 4 to 7 moles of ClO₂ to 5 moles of NO. Preferably the practitioner uses slightly greater than stoichiometric amounts of sodium chlorite, such that 3 to 4 moles of ClO₂ to 5 moles of NO are present after the sodium chlorite disproportionates.

As previously stated, sodium chlorite can also oxidize NOₓ's directly. This oxidation occurs in a slightly acidic environment, pH of 6 to 7, a neutral environment, pH of 7, or a basic environment, pH above 7. However, as the pH increases to 10, the absorption of NOₓ's decreases. In this aspect of the invention, the inventors hereof believe that the mechanism by which sodium chlorite reacts directly with NOₓ's is represented by Equation 2 below.

Equation 2: 4NO + 3NaClO₂ + 2H₂O → 4HNO₃ + 3NaCl

When sodium chlorite oxidizes NOₓ's directly, the amount of sodium chlorite used will be from 3 to 10 times the stoichiometric amount of sodium chlorite, preferably from 2 to 8 times the stoichiometric amount, and most preferably slightly greater than the stoichiometric amount of sodium chlorite, for example, 1.1 to 2.5 times the stoichiometric amount, needed to oxidize at least a portion of the lower nitrogen oxides to higher oxides.

After at least a portion of the lower NOₓ's are oxidized to higher nitrogen oxides, another embodiment of the present invention involves the removal of at least a portion of the higher oxides. The removal of the higher oxides is achieved by any known process in the art. These processes include, but are not limited to, the use of an alkaline solution such as an aqueous caustic soda solution or a reducing solution such as an aqueous sodium thiosulfate solution; sodium chlorite absorption; catalytic conversion; and ammonia and hydrogen injection, as described in United States Patent Number 3,900,554 to Lyon, which has already been incorporated herein by reference. Most preferably the oxidized NOₓ compounds are removed by scrubbing with water because, as previously discussed, the higher oxides such as, for example, NO₂ and N₂O₅ are water soluble. In the practice of the presently claimed invention, 20 vol.% to 100 vol.% of the higher oxides are removed after oxidation, preferably 40 vol.% to 80 vol.% of the higher oxides are removed after oxidation, more preferably 60 vol.% to 90 vol.% of the higher oxides of the NOₓ's are removed after oxidation.

Also, as previously discussed, it is within the scope of the present invention to remove at least a portion of the SOₓ's from the waste gas stream by use of a wet gas scrubber. Thus, in one embodiment of the present invention, the sodium chlorite is mixed with the waste gas stream in the already existing separator drum associated with the wet gas scrubber. A separator drum typically contains hardware such as spray nozzles located within the separator drum. In this embodiment, the sodium chlorite is sprayed through the spray nozzles such that when the contaminated flue gas stream is fed into the wet gas separator drum, it first contacts the sodium chlorite. The sodium chlorite can first mixed with deionized water which acts as a carrier fluid to better disperse the sodium chlorite. Also, in this embodiment, additional amounts of deionized water may be sprayed through the spray nozzles. By additional amount of deionized water, it is meant that amount of deionized water sufficient to absorb at least a portion of the higher oxides.

In another embodiment of the presently claimed invention, a greater amount of sodium chlorite than necessary to oxidize a portion of the NOₓ's present in the waste gas stream is mixed with the waste gas stream after the SOₓ removal step. This additional amount of sodium chlorite allows the refiner the ability to oxidize at least a portion of any SOₓ's remaining in the waste gas stream after the SOₓ removal step to higher oxides. These higher oxides of SOₓ's can then be removed by any method known in the art.

The above description is directed to several preferred means for carrying out the present invention. Those skilled in the art will recognize that other means which are equally effective could be devised for carrying out the spirit of this invention.

### EXAMPLES

The following examples will illustrate the effectiveness of the present process, but are not meant to limit the present invention in any manner.

### EXAMPLE 1:

In a bench scale environment, the addition of sodium chlorite to a waste gas stream was tested. The concentration of SOₓ's and NOₓ's present in the waste gas stream, a simulated scrubber liquor, were measured before the experiment began, and this data is included in Table 1. The initial temperature of the stream was measured using a thermocouple device and was observed to be 68°F. The initial oxygen concentration of the waste gas stream was also measured and was determined to be 3.0 vol.% O₂.

The waste gas was allowed to flow through a 5 cm bench scale Venturi scrubber, and sodium chlorite was added to the.waste gas stream downstream from the scrubber. The pH and sodium chlorite concentration of the system, along with the outlet concentration of SOₓ's and NOₓ's, were also monitored. The experiment removed greater than 95% of the SOₓ's and greater than 90% NOₓ's initially present in the waste gas stream. All parameters, along with the results of the experiment, are reported in Table 1.

**Table 1**

| | |
|---|---|
| NOx inlet | 50-60 ppmv |
| SOx inlet | 50-500 ppmv |
| Waste Gas Temperature | 20°C (68°F) |
| 02 vol.% | 3 |
| Scrubber Liquor | simulated |
| NaClO2 concentration | 0.01-0.1M |
| system pH | 4.05-9.10 |
| NOx outlet (% removal) | > 90% |
| SOx outlet (% removal) | > 95% |

### EXAMPLE 2:

The latter portion of the instant invention was tested, e.g. sodium chlorite addition after an SOₓ removal step, on a full-scale operational fluidized catalytic cracking process unit. The experiment was performed without any modifications to the existing separator drum associated with the wet gas scrubber of the fluidized catalytic cracking process unit.

In this experiment, the spray nozzles of the wet gas scrubber separator drum associated with the wet gas scrubber of the fluidized catalytic process unit were used to mix the sodium chlorite with the waste gas stream. Thus, the sodium chlorite was mixed with deionized water and sprayed into the separator drum using the spray nozzles. An additional amount of deionized water was also used in this experiment to remove a portion of the higher oxides by water absorption.

This experiment implemented only the step of adding sodium chlorite after an SOₓ removal step on a fluidized catalytic cracking process unit for a period of three days during which the NO oxidation, overall NOₓ removal, sodium chlorite flow rate, and deionized water flow rate were monitored and recorded. The NO oxidation and NOₓ removal is reported as a percentage which is defined for uses herein as the [(inlet concentration - the outlet concentration)/inlet concentration] * 100. This data is reported below in Table 2.

**Table 2**

| Day | Water Flow (gpm) | NaClO2 flow (gpm) | NO oxidation % | NOx removal % |
|---|---|---|---|---|
| 1 | | 0 | 0 | 0 |
| | 80-90 | 0 | 0 | 0 |
| | 90 | 1 | 42 | 15 |
| | 200 | 2.3 | 94 | 49 |
| | 300 | 2.3 | 99 | 57 |
| | 465 | 2 | 99 | 55 |
| 2 | 465 | 2 | 99 | 46 |
| | 465 | 1.8 | 99 | 44 |
| | 465 | 1.5 | 99 | 42 |
| | 465 | 1.25 | 99 | 40 |
| | 465 | 1.1 | 99 | 39 |
| | 465 | 0.7 | 93 | 39 |
| | 465 | 0 | 0 | 0 |
| 3 | 170 | 1 | 51 | 9 |
| | 170 | 1.8 | 63 | 13 |
| | 170 | 2 | 67 | 13 |
| | 170 | 2.3 | 76 | 15 |
| | 350 | 2.3 | 98 | 32 |
| | 465 | 2.2 | 97 | 45 |
| | 350 | 1.8 | 99 | 44 |
| | 350 | 1 | 97 | 38 |

It should also be noted that the maximum water flow rate associated with the spray nozzles of the separator drum utilized in this experiment was 465 gpm. Thus, the inventors herein believe, based on the collected data, that by utilizing spray nozzles with a higher flow rate capacity, or modifying the spray nozzles used herein in a manner such that their flow rate capacity is increased, the NOₓ removal rate would increase.

Also, the inventors herein believe, and one having ordinary skill in the art would understand, that by increasing the gas/liquid contact area, the NOₓ removal rate would increase. The amount of packing material used in this experiment was limited to 5 ft of the separator drum. Thus, the refiner could increase the gas/liquid contact area by, for example, increasing the volume of packing material or by utilizing a packing material that would provide for an increased gas/liquid contact area.

## Claims

1. A process for oxidizing NOₓ's contained in a SOₓ containing waste gas stream, which stream contains both lower and higher nitrogen oxides, wherein the process comprises:
a) forming a mixture of a reducing agent selected from ammonia and urea and a readily-oxidizable gas in an effective amount that will reduce the NOₓ concentration of said waste gas stream by a predetermined amount;
b) injecting said mixture into said waste gas stream at a point wherein said SOₓ-containing waste gas stream is at a temperature below 870 °C (1600°F);
c) removing a1 least a portion of SOₓ's present in said waste gas stream followed by;
d) mixing an effective amount of sodium chlorite with said waste gas stream at a point downstream from step c) above thereby oxidizing at least a portion of said NOₓ's present in said waste gas stream to higher oxides.

2. The process according to claim 1 wherein said waste gas stream is generated by a fluidized catalytic cracking process unit ("FCCU"), said FCCU having a regenerator.

3. The process according to claim 2 wherein said mixture is injected into regenerator off-gas generated by said FCCU.

4. The process of claim 3 wherein said readily-oxidizable gas is selected from the group consisting of paraffinic, olefinic and aromatic hydrocarbons and mixtures thereof, gasoline, fuel oil, oxygenated hydrocarbons, formic and oxalic acids, nitrogenated hydrocarbons, sulfonated hydrocarbons, carbon monoxide, and hydrogen.

5. The process accord ing to claim 4 wherein said reducing agent is ammonia.

6. The process according to claim 5 wherein said reducing agent is injected in a molar ratio of 0.5 to 12 moles per mole of NOₓ.

7. The process according to claim 6 wherein said mixture comprises said readily-oxidizable gas and said reducing agent in a molar ratio of 1:1 to 50:1 moles of readily-oxidizable gas per mole of reducing agent.

8. The process according to claim 7 wherein said reducing agent and readily-oxidizable gas are injected with a carrier material such as steam or air.

9. The process according to claim 8 wherein catalyst fines from the regenerator are present in the regenerator off-gas.

10. The process according to claim 9 wherein said mixture is injected into said regenerator off-gas at a point between the regenerator and a carbon monoxide combustion/heat recovery unit (COHRU).

11. The process of claim 1 wherein said predetermined amount is a reduction of NOₓ in said process stream by more than 30 vol.%.

12. The process according to claim 2 wherein step c) above is carried out by wet desulfurization processes such as water scrubbing, alkali scrubbing, magnesia scrubbing, ammonium scrubbing or dry desulfurization processes such as using manganese oxide or activated carbon.

13. The process according to claim 12 wherein said SOₓ's are removed by wet gas scrubbing.

14. The process according to claim 13 wherein said sodium chlorite is mixed with said waste gas stream at a point downstream from the wet gas scrubber of a combustion unit.

15. The process according to claim 14 wherein said sodium chlorite is mixed with said waste gas stream in said wet gas scrubber's separation drum.

16. The process according to claim 15 wherein said sodium chlorite is mixed with said waste gas stream in said wet gas scrubber's separation drum by using the spray nozzles of said wet gas scrubber separation drum.

17. The process according to claim 16 wherein said sodium chlorite is mixed with deionized water before mixing with said waste gas stream.

18. The process according to claim 1 wherein said higher oxides of nitrogen are removed after step c).

19. The process according to claim 18 wherein said higher oxides are removed by a means selected from the group consisting of alkaline solution absorption, reducing solution absorption, scrubbing, ammonia injection, absorption with water, and catalytic conversion.

20. The process according to claim 17 wherein an additional amount of deionized water is mixed with said sodium chlorite wherein said additional amount of deionized water absorbs at least a portion of said higher oxides of nitrogen.

## Patentansprüche

1. Verfahren zur Oxidation von NOₓ, die in einem SOₓ-enthaltenden Abgasstrom enthalten sind, der sowohl niedere als auch höhere Stickoxide enthält, bei dem
a) eine Mischung eines Reduktionsmittels ausgewählt aus Ammoniak und Harnstoff und eines leicht oxidierbaren Gases in einer wirksamen Menge gebildet wird, die die NOₓ-Konzentration des Abgasstroms um eine festgelegte Menge reduziert,
b) die Mischung an einem Punkt in den Abgasstrom injiziert wird, an dem der SOₓ-enthaltende Abgasstrom eine Temperatur von unter 870 °C (1600°F) aufweist,
c) mindestens ein Teil der in dem Abgasstrom vorhandenen SOₓ entfernt wird und anschließend
d) eine wirksame Menge Natriumchlorit mit dem Abgasstrom an einem Punkt stromabwärts von Stufe c) gemischt wird, wodurch mindestens ein Teil der in dem Abgasstrom vorhandenen NOₓ zu höheren Oxiden oxidiert wird.

2. Verfahren nach Anspruch 1, bei dem der Abgasstrom durch eine katalytische Wirbelschicht-Crackanlage ("FCCU") erzeugt wird, wobei die FCCU einen Regenerator aufweist.

3. Verfahren nach Anspruch 2, bei dem die Mischung in von der FCCU erzeugtes Regeneratorabgas injiziert wird.

4. Verfahren nach Anspruch 3, bei dem das leicht oxidierbare Gas aus der Gruppe bestehend aus paraffinischen, olefinischen und aromatischen Kohlenwasserstoffen und Mischungen davon, Benzin, Brennstofföl, oxygenierten Kohlenwasserstoffen, Ameisen- und Oxalsäuren, stickstoffhaltigen Kohlenwasserstoffen, sulfonierten Kohlenwasserstoffen, Kohlenmonoxid und Wasserstoff ausgewählt ist.

5. Verfahren nach Anspruch 4, bei dem das Reduktionsmittel Ammoniak ist.

6. Verfahren nach Anspruch 5, bei dem das Reduktionsmittel in einem Molverhältnis von 0,5 bis 12 Mol pro Mol NOₓ injiziert wird.

7. Verfahren nach Anspruch 6, bei dem die Mischung das leicht oxidierbare Gas und das Reduktionsmittel in einem Molverhältnis von 1:1 bis 50:1 Mol des leicht oxidierbaren Gases pro Mol des Reduktionsmittels umfasst.

8. Verfahren nach Anspruch 7, bei dem das Reduktionsmittel und das leicht oxidierbare Gas mit einem Trägermaterial wie Dampf oder Luft injiziert werden.

9. Verfahren nach Anspruch 8, bei dem in dem Regeneratorabgas Katalysatorfeinteilchen aus dem Regenerator vorhanden sind.

10. Verfahren nach Anspruch 9, bei dem die Mischung an einem Punkt zwischen dem Regenerator und einer Kohlenmonoxidverbrennungs-/Wärmerückgewinnungs-Anlage (COHRU) in das Regeneratorabgas injiziert wird.

11. Verfahren nach Anspruch 1, bei dem die festgelegte Menge eine Reduktion von NOₓ in dem Prozessstrom um mehr als 30 Vol.% ist.

12. Verfahren nach Anspruch 2, bei dem die obige Stufe c) durch Nassentschwefelungsverfahren wie Wasserwäsche, Alkaliwäsche, Magnesiumoxidwäsche, Ammoniumwäsche, oder Trockenentschwefelungsverfahren wie unter Verwendung von Manganoxid oder Aktivkohle durchgeführt wird.

13. Verfahren nach Anspruch 12, bei dem die SOₓ durch Nassgaswäsche entfernt werden.

14. Verfahren nach Anspruch 13, bei dem das Natriumchlorit an einem Punkt stromabwärts von dem Nassgaswäscher einer Verbrennungsanlage mit dem Abgasstrom gemischt wird.

15. Verfahren nach Anspruch 14, bei dem das Natriumchlorit in der Abscheidetrommel des Nassgaswäschers mit dem Abgasstrom gemischt wird.

16. Verfahren nach Anspruch 15, bei dem das Natriumchlorit in der Abscheidetrommel des Nassgaswäschers mit dem Abgasstrom gemischt wird, indem die Sprühdüsen der Abscheidetrommel des Nassgaswäschers verwendet werden.

17. Verfahren nach Anspruch 16, bei dem das Natriumchlorit mit entionisiertem Wasser gemischt wird, bevor es mit dem Abgasstrom gemischt wird.

18. Verfahren nach Anspruch 1, bei dem die höheren Oxide von Stickstoff nach Stufe c) entfernt werden.

19. Verfahren nach Anspruch 18, bei dem die höheren Oxide durch ein Mittel ausgewählt aus der Gruppe bestehend aus Absorption in alkalischer Lösung, Absorption in reduzierender Lösung, Wäsche, Ammoniakinjektion, Absorption mit Wasser und katalytischer Umwandlung entfernt wird.

20. Verfahren nach Anspruch 17, bei dem eine weitere Menge an entionisiertem Wasser mit dem Natriumchlorit gemischt wird, wobei die weitere Menge an entionisiertem Wasser mindestens einen Teil der höheren Oxide von Stickstoff absorbiert.

## Revendications

1. Procédé d'oxydation des NOₓ contenus dans un courant de gaz d'échappement contenant SOₓ, lequel courant contient à la fois des oxydes d'azote inférieurs et des oxydes d'azote supérieurs, procédé qui comprend les étapes suivantes :
a) la formation d'un mélange d'un agent réducteur choisi parmi l'ammoniac et l'urée et d'un gaz facilement oxydable en une quantité efficace qui réduira d'une quantité prédéterminée la concentration en NOₓ dudit courant de gaz d'échappement ;
b) l'injection dudit mélange dans ledit courant de gaz d'échappement en un point auquel ledit courant de gaz d'échappement contenant SOₓ est à une température inférieure à 870°C (1600°F) ;
c) l'élimination d'au moins une partie des SOₓ présents dans ledit courant de gaz d'échappement; suivie par
d) le mélange d'une quantité efficace de chlorite de sodium avec ledit courant de gaz d'échappement en un point en aval de l'étape c) ci-dessus, afin d'oxyder au moins une partie desdits NOₓ présents dans ledit courant de gaz d'échappement en oxydes supérieurs.

2. Procédé selon la revendication 1 dans lequel ledit courant de gaz d'échappement est produit par une unité de craquage catalytique en lit fluidisé ("FCCU"), ladite FCCU comportant un régénérateur.

3. Procédé selon la revendication 2 dans lequel ledit mélange est injecté dans l'effluent gazeux du régénérateur produit par ladite FCCU.

4. Procédé selon la revendication 3 dans lequel ledit gaz facilement oxydable est choisi dans le groupe constitué par les hydrocarbures paraffiniques, oléfiniques et aromatiques et leurs mélanges, l'essence, le fioul, les hydrocarbures oxygénés, les acides formique et oxalique, les hydrocarbures azotés, les hydrocarbures sulfonés, le monoxyde de carbone et l'hydrogène.

5. Procédé selon la revendication 4 dans lequel ledit agent réducteur est l'ammoniac.

6. Procédé selon la revendication 5 dans lequel ledit agent réducteur est injecté dans un rapport molaire de 0,5 à 12 moles par mole de NOₓ.

7. Procédé selon la revendication 6 dans lequel ledit mélange comprend ledit gaz facilement oxydable et ledit agent réducteur dans un rapport molaire de 1:1 à 50:1 moles de gaz facilement oxydable par mole d'agent réducteur.

8. Procédé selon la revendication 7 dans lequel ledit agent réducteur et ledit gaz facilement oxydable sont injectés avec un véhicule tel que la vapeur d'eau ou l'air.

9. Procédé selon la revendication 8 dans lequel des fines de catalyseur provenant du régénérateur sont présentes dans l'effluent gazeux du régénérateur.

10. Procédé selon la revendication 9 dans lequel ledit mélange est injecté dans ledit effluent gazeux du régénérateur en un point situé entre le régénérateur et une unité de combustion du monoxyde de carbone/récupération de la chaleur (COHRU).

11. Procédé selon la revendication 1 dans lequel ladite quantité prédéterminée est une réduction de NOₓ de plus de 30 % en volume dans ledit courant de procédé.

12. Procédé selon la revendication 2, dans lequel l'étape c) ci-dessus est réalisée par des procédés de désulfuration à l'état humide tels que l'épuration à l'eau, l'épuration à l'alcali, l'épuration à la magnésie, l'épuration à l'ammonium, ou des procédés de désulfuration à sec tels qu'en utilisant de l'oxyde de manganèse ou du charbon actif.

13. Procédé selon la revendication 12 dans lequel lesdits SOₓ sont éliminés par épuration au gaz humide.

14. Procédé selon la revendication 13 dans lequel ledit chlorite de sodium est mélangé avec ledit courant de gaz d'échappement en un point en aval de l'épurateur à gaz humide d'une unité de combustion.

15. Procédé selon la revendication 14 dans lequel ledit chlorite de sodium est mélangé avec ledit courant de gaz d'échappement dans ledit tambour de séparation de l'épurateur à gaz humide.

16. Procédé selon la revendication 15 dans lequel ledit chlorite de sodium est mélangé avec ledit courant de gaz d'échappement dans ledit tambour de séparation de l'épurateur à gaz humide en utilisant les buses de pulvérisation dudit tambour de séparation de l'épurateur à gaz humide.

17. Procédé selon la revendication 16 dans lequel ledit chlorite de sodium est mélangé avec de l'eau désionisée avant de le mélanger avec ledit courant de gaz d'échappement.

18. Procédé selon la revendication 1 dans lequel lesdits oxydes d'azote supérieurs sont éliminés après l'étape c).

19. Procédé selon la revendication 18 dans lequel lesdits oxydes supérieurs sont éliminés par un moyen choisi parmi le groupe constitué de l'absorption par une solution alcaline, de l'absorption par une solution réductrice, de l'épuration, de l'injection d'ammoniac, de l'absorption avec de l'eau et de la conversion catalytique.

20. Procédé selon la revendication 17 dans lequel une quantité supplémentaire d'eau désionisée est mélangée avec ledit chlorite de sodium, ladite quantité supplémentaire d'eau désionisée absorbant au moins une portion desdits oxydes d'azote supérieurs.
